# EUROPEAN PATENT SPECIFICATION

(11) **EP 4 478 111 B1**
(45) Date of publication and mention of the grant of the patent: **29.04.2026**
(21) Application number: 23752598.5
(22) Date of filing: 12.01.2023
(51) Int. Cl.: G02C 7/04, G02B 5/18, G02B 5/30, G02B 5/32, G02B 27/02, G02B 27/01, G02C 11/00

(54) **DISPLAY DEVICE TO BE MOUNTED ON EYEBALL, CONTACT LENS, AND METHOD FOR DRIVING DISPLAY DEVICE**
ANZEIGEVORRICHTUNG ZUR MONTAGE AUF DEM AUGAPFEL, KONTAKTLINSE UND VERFAHREN ZUR ANSTEUERUNG DER ANZEIGEVORRICHTUNG
DISPOSITIF D'AFFICHAGE DESTINÉ À ÊTRE MONTÉ SUR UN GLOBE OCULAIRE, LENTILLE DE CONTACT ET PROCÉDÉ DE COMMANDE DE DISPOSITIF D'AFFICHAGE

(30) Priority: 14.02.2022 JP 2022020433
(43) Date of publication of application: 18.12.2024
(73) Proprietor: National University Corporation Tokyo University Of Agriculture and Technology, Fuchu-shi Tokyo 183-8538 (JP)
(72) Inventor: TAKAKI Yasuhiro, Fuchu-shi, Tokyo 183-8538 (JP)
(74) Representative: Michalski Hüttermann & Partner Patentanwälte mbB
(86) International application number: PCT/JP2023/000689
(87) International publication number: WO 2023/153129

(56) References cited:
- WO-A1-2019/189818
- WO-A1-2021/020069
- WO-A1-2021/148548
- WO-A1-2021/148548
- WO-A1-2021/192673
- JP-A- 2005 311 823
- JP-A- 2018 527 712
- US-A1- 2023 023 682
- US-B1- 9 810 910
- SANO JUNPEI ET AL: "Holographic contact lens display that provides focusable images for eyes", TOKYO UNIVERSITY OF AGRICULTURE AND TECHNOLOGY, vol. 29, no. 7, 19 March 2021 (2021-03-19), pages 10568, XP093083390, DOI: 10.1364/OE.419604
- SANO JUNPEI, TAKAKI YASUHIRO: "Holographic contact lens display that provides focusable images for eyes", TOKYO UNIVERSITY OF AGRICULTURE AND TECHNOLOGY, vol. 29, no. 7, 29 March 2021 (2021-03-29), pages 10568, XP093083390, DOI: 10.1364/OE.419604

## Description

### BACKGROUND

### 1. TECHNICAL FIELD

The present invention relates to a display device of an eyeball-mounted type, a contact lens, and a driving method for driving the display device.

### 2. RELATED ART

Document "J. Sano, S.Liu, Y Nagahama, and Y Takaki, "Contact Lens Display Based on Holography," The 26th International Display Workshops (IDW '19), Sapporo, Hokkaido, Japan, 28 Nov. 2019" describes that the laser backlight emits vertically polarized laser light to illuminate the phase-only SLM. The phase-only SLM modulates the phase of the vertically polarized light and do not modulate the phase of the horizontally polarized light. The vertically polarized light is modulated to produce wavefront for the image generation. The polarizer transmits the horizontally polarized light from outer scenery, which is not modulated by the SLM.

In JP 2005 311823 A, the problem to be solved is to provide a display unit that avoids the mounting issues of conventional spectacles-type head-mounted displays while achieving high-definition and good display quality. The solution according to this document is a display unit worn directly on the eye, with a mounting body shaped like a curved plate that fits along the outer surface of the cornea. This mounting body includes a display structure that emits light to create a Maxwellian view.

The document "SANO JUNPEI ET AL: "Holographic contact lens display that provides focusable images for eyes", TOKYO UNIVERSITY OF AGRICULTURE AND TECHNOLOGY, vol. 29, no. 7, 19 March 2021 (2021-03-19), page 10568, XP093083390, DOI: 10.1364/OE.419604" presents a holographic image generation method for contact lens displays that uses a phase-only spatial light modulator (SLM), a holographic optical element (HOE) as a backlight, and a polarizer. The technique enables the creation of 3D images at a distance from the display, allowing the eye to focus on these images while still seeing the real-world environment through the see-through SLM and HOE backlight. A bench-top experimental setup was built to demonstrate both the generation of distant images and the see-through capability.

WO 2021/148548 A1 describes an augmented reality contact lens includes a transparent body that fits over the eye and at least one augmented reality module. This module features an optical source that emits light into the transparent body and an optical element that receives the light and directs it toward the eye. The optical element is a hologram designed to diffract the light into a holographic image visible to the wearer.

US 9 810 910 B1 describes a contact lens which includes a transparent material, a substrate material, a light source, an optical system, and a phase map. The transparent material has an eye-side opposite an external side. The eye-side is curved to fit the human eye. The light source is configured to emit illumination light. The optical system is configured to receive the illumination light from the light source and output the illumination light as an in-phase wavefront. The phase map is configured to adjust a phase of the in-phase wavefront to form an image at a retina-distance in response to being illuminated by the in-phase wavefront. The phase map is pre-recorded with a phase pattern that is included in the image.

### GENERAL DISCLOSURE

The invention is defined by the independent claims. Embodiments of the invention are described in the dependent claims. A first aspect of the present invention provides a display device of an eyeball-mounted type. The display device includes a backlight that emits spatially coherent light which converges within a predetermined region. The display device includes a spatial light modulator which forms a hologram pattern, and generates a reconstructed image corresponding to the hologram pattern by spatially modulating a phase of the light entering from the backlight.

The backlight may have a convexly curved shape or a flat shape.

The spatial light modulator may have a convexly curved shape or a flat shape.

The backlight and the spatial light modulator may have a convexly curved shape to follow a user's cornea when the display device is attached to a user's eyeball.

The backlight and the spatial light modulator may cover an entirety of a user's cornea when the display device is attached to a user's eyeball.

The display device may further include a polarizer. The backlight may be transparent. The spatial light modulator may modulate the phase of the light entering from the backlight and does not modulate a phase of a light component, which is transmitted through the polarizer, of external light.

The backlight may have a waveguide, a thin film diffraction grating provided in the waveguide, and a light source that emits the light into the waveguide.

The thin film diffraction grating may converge the light within the predetermined region by diffracting the light emitted into the waveguide from the light source.

The thin film diffraction grating may include at least any of a nanostructured diffraction grating or a hologram optical element.

An optical coupling efficiency of the thin film diffraction grating may be lower when closer to a position where the light from the light source enters into the waveguide.

The light source may include a plurality of light sources, the backlight may have the plurality of light sources, and the plurality of light sources may emit the light from positions different from each other in a periphery of the waveguide into the waveguide.

The light source may be a laser or an LED.

A second aspect of the present invention provides a contact lens including any above-described display device, and a lens substrate enclosing the display device.

A third aspect of the present invention provides a driving method for driving a display device of an eyeball-mounted type with a backlight and a spatial light modulator. The driving method includes emitting a spatially coherent light which converges within a predetermined region by the backlight. The driving method includes forming a hologram pattern and generating a reconstructed image corresponding to the hologram pattern by spatially modulating a phase of the light entering from the backlight, by the spatial light modulator.

Note that the summary clause does not necessarily describe all necessary features of the embodiments of the present invention. The present invention may also be a sub-combination of the features described above.

### BRIEF DESCRIPTION OF THE DRAWINGS

Fig. 1 schematically illustrates a contact lens 10 according to one embodiment attached to a user's eyeball 30.
Fig. 2 illustrates a partially enlarged view of a region including the contact lens 10 in Fig. 1.
Fig. 3 illustrates a flowchart for describing one example of a driving method for driving a display device 100 of the contact lens 10.
Fig. 4 schematically illustrates a contact lens 20 of a comparative example attached to the user's eyeball 30.
Fig. 5 schematically illustrates a contact lens 10 according to another embodiment attached to the user's eyeball 30.
Fig. 6 illustrates a partially enlarged view of a region including the contact lens 10 in Fig. 5.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

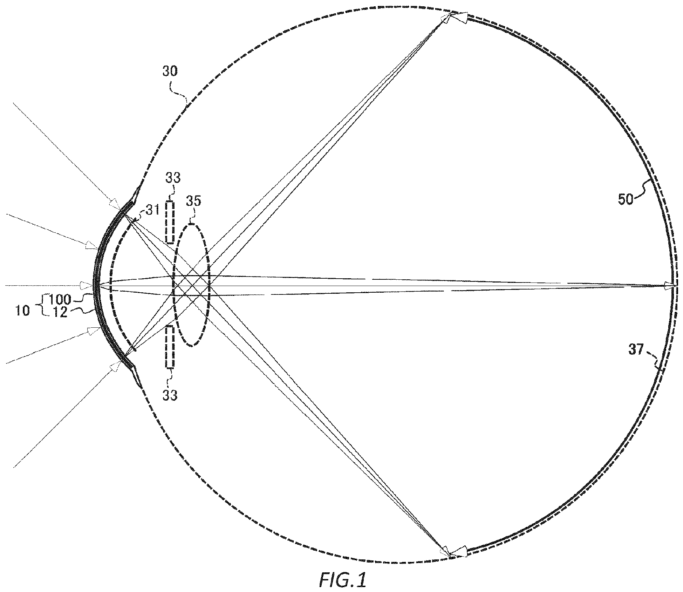

Fig. 1 schematically illustrates a contact lens 10 according to one embodiment attached to a user's eyeball 30. The eyeball 30 may be a right eye or may be a left eye of the user. The contact lens 10 may be attached to each of the left and right eyeballs 30 of the user or may be attached only to an eyeball 30 on one side. Fig. 1 indicates the contact lens 10 by a solid line, and the eyeball 30 by a dashed line. Fig. 1 further indicates exemplary beams by fine line arrows for description. So does the subsequent figures.

The contact lens 10 according to the present embodiment includes a display device of an eyeball-mounted type 100 and a lens substrate 12. An outer shape of the contact lens 10 is similar to a common contact lens.

The display device 100 is a display using a holography technology, configured to form a hologram pattern, and generate a corresponding reconstructed image as a virtual image in a position away from the display device 100. The position is sufficiently far away from the display device 100 to the external side, for example, from a few centimeters to infinity, so that the user's eyeball 30 wearing the contact lens 10 can focus on it. When the user's eyeball 30 focuses on the virtual image, an image 50 of the virtual image is formed on a retina 37 of the eyeball 30. Further, the display device 100 transmits some components of light from the external world. This allows the user wearing the contact lens 10 to simultaneously observe the reconstructed image generated by the display device 100 and the external world.

The display device 100 uses spatially coherent light that converges within a predetermined region, as an illuminating light for generating the reconstructed image. When compared to using an entirely flat spatial light modulator using a plane wave as the illuminating light, the display device 100 enlarges a field of view, and forms a larger image 50 on the retina 37 of the eyeball 30.

The lens substrate 12 has a transparent, circular plate-shaped body and forms a contour of the contact lens 10. In the present application, being transparent refers to being transparent at least for a visible wavelength region, excluding unavoidable absorption for a particular wavelength, unless otherwise specified. The lens substrate 12 encloses the display device 100. Therefore, the display device 100 is not exposed to the outside nor contacts the user's eyeball 30 wearing the contact lens 10. Further, the lens substrate 12 may have a lens power or may not have a lens power. When referring to the display device 100 in the following descriptions, it may refer to the display device 100 alone or may refer to the display device 100 enclosed in the lens substrate 12, i.e. the contact lens 10.

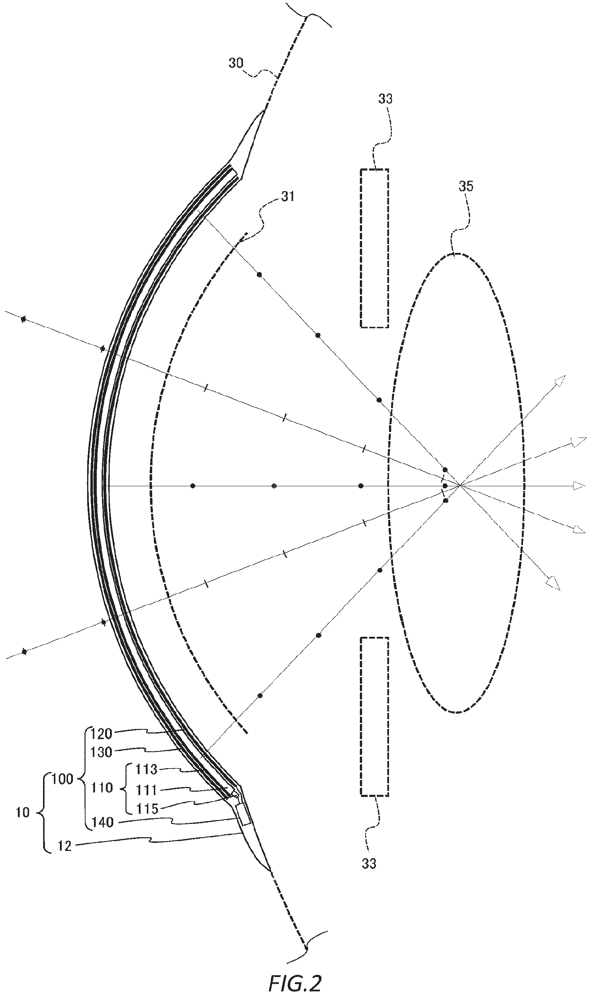

Fig. 2 is a partially enlarged view of a region including the contact lens 10 in Fig. 1. In Fig. 2, a part of the eyeball 30 is omitted by wave lines. Further, on a part of beams indicated by fine lines, linearly polarized light that is polarized in a particular direction is indicated by black painted circles for description. On the rest part of the beams, linearly polarized light that is polarized in a direction orthogonal to the particular direction is indicated by a line intersecting each of the beams at a right angle for description. On the beams, unpolarized external light before entering the contact lens 10 is indicated by both the black painted circles and the line intersecting at the right angle.

The display device 100 includes a backlight 110 and a spatial light modulator 120. As one example, the display device 100 according to the present embodiment further includes a polarizer 130 and a driving unit 140. The display device 100 of the present embodiment is configured so that the polarizer 130, the backlight 110, and the spatial light modulator 120 line up in this order from the external side when attached to the user's eyeball 30.

The backlight 110 emits spatially coherent light that converges within the predetermined region described above. The spatially coherent light that converges within the predetermined region is, for example, directed toward a center of an entrance pupil in an entire optical system created by the eyeball 30. The light is a spherical wave.

The backlight 110 according to the present embodiment has a convexly curved shape as one example. This allows the backlight 110 to follow a user's cornea 31 when the display device 100 is attached to the user's eyeball 30. It becomes easier for the backlight 110 to converge light in the vicinity of the center of a crystalline lens 35 of the eyeball 30 similarly to the cornea 31, by being formed to follow the cornea 31. In this case, the backlight 110 may be designed so that the center of curvature of the backlight 110 or a converging position of the light emitted by the backlight 110 coincides with the center of curvature of the cornea 31. In the specification of the present application, when it is described that any configuration of the display device 100 has a convexly curved shape, the convex surface is intended to be directed toward the external side when the display device 100 is attached to the user's eyeball 30.

As a suitable example when the backlight 110 has a convexly curved shape, the backlight 110 covers an entirety of the user's cornea 31 when the display device 100 is attached to the user's eyeball 30. In this case, the spatial light modulator 120 may generate a reconstructed image for the user's full field of view. As another example, the backlight 110 may only cover a part of the user's cornea 31. In this case, the backlight 110 may only cover, for example, an annular region concentric with the contact lens 10.

The backlight 110 according to the present embodiment is transparent as one example. For example, the backlight 110 can be nearly transparent because it diffracts some of wavelength components of the external light and transmits most of the wavelength components other than the some of the wavelength components without a diffraction effect.

The backlight 110 according to the present embodiment includes, as one example, a waveguide 111, a thin film diffraction grating 113 provided in the waveguide 111, and a light source 115 that emits the spatially coherent light into the waveguide 111. A thickness of the waveguide 111 is, for example, approximately 0.1 mm. The waveguide 111 may form a contour of the backlight 110, i.e. may have a convexly curved shape. Inside the waveguide 111, light emitted by the light source 115 propagates with total reflection.

The thin film diffraction grating 113 converges the light within the predetermined region described above by diffracting the light emitted into the waveguide 111 from the light source 115. The thin film diffraction grating 113 may include at least any of a nanostructured diffraction grating or a hologram optical element.

As one example, the thin film diffraction grating 113 is provided in the waveguide 111 so that it is positioned on the external side or the opposite side of the waveguide 111 when the contact lens 10 is attached to the user's eyeball 30. The thin film diffraction grating 113 may be formed integrally with the waveguide 111 or may be formed into a film shape and adhered to a surface of the waveguide 111.

The spatially coherent light with a particular wavelength, which is the linearly polarized light polarized toward the particular direction, is emitted by the light source 115 into the waveguide 111. The particular wavelength is the same as the wavelength of the light used during the calculation of the hologram pattern formed by the display device 100, and for example, may be a wavelength of a visible wavelength range or may be a wavelength of an infrared wavelength range. The thin film diffraction grating 113 diffracts the light with the particular wavelength toward a direction orthogonal to a wavefront converging within the predetermined region. Note that the thin film diffraction grating 113 transmits light with a wavelength other than the particular wavelength without the diffraction effect.

An optical coupling efficiency of the thin film diffraction grating 113 is preferably lower when closer to an incident position of the light into the waveguide 111 from the light source 115. Light intensity of the light emitted from the backlight 110 can be made uniform by forming the thin film diffraction grating 113 so that the optical coupling efficiency of the thin film diffraction grating 113, i.e. a diffraction efficiency indicating an efficiency of converting incident light into diffracted light, becomes lower when a distance from the light source 115 is shorter. For the same purpose, the backlight 110 has a plurality of light sources 115, and the plurality of light sources 115 may emit light into the waveguide 111 from positions different from each other in a periphery of the waveguide 111.

The light source 115 emits at least the spatially coherent light. The light source 115 may be, for example, a semiconductor laser, and emit spatially and temporally coherent laser light. The light source 115 may be, for example, an LED, and emit spatially coherent light.

The spatial light modulator 120 forms the hologram pattern. The spatial light modulator 120 is, for example, a transmissive liquid crystal element, and forms a two-dimensional hologram pattern according to a voltage value applied to a matrix electrode connected to the liquid crystal layer. A thickness of the spatial light modulator 120 with such a configuration is, for example, approximately 10 µm. Because the lens substrate 12 of the contact lens 10 is required to permeate oxygen, an encapsulant or the like is preferably used in the spatial light modulator 120 which is a liquid crystal element to prevent oxygen from affecting the liquid crystal itself.

The spatial light modulator 120 generates the reconstructed image corresponding to the hologram pattern by spatially modulating a phase of the spatially coherent light entering from the backlight 110. As described above, the spatially coherent light entering from the backlight 110 is the linearly polarized light polarized toward the particular direction. The spatial light modulator 120 modulates the phase of the spatially coherent light entering from the backlight 110 and does not modulate the phase of light components, which is transmitted through the polarizer 130, of the external light.

The spatial light modulator 120 two-dimensionally modulates the phase of light, and controls the wavefront of the light, only regarding the light polarized to the particular direction. The spatial light modulator 120 transmits light and does not modulate the phase of light regarding the light polarized toward a direction orthogonal to the particular direction. The spatial light modulator 120 does not modulate an amplitude of light. More specifically, when the spatial light modulator 120 transmits light, some light absorption occurs, but it is nearly uniform spatially, so the amplitude of the light is hardly spatially modulated.

When the display device 100 is attached to the user's eyeball 30 and the eyeball 30 focuses on the reconstructed image, the spatial light modulator 120 forms the image 50 of the reconstructed image described above on the retina 37 of the eyeball 30.

As one example, the spatial light modulator 120 according to the present embodiment has a convexly curved shape. This allows the spatial light modulator 120 to follow the user's cornea 31 when the display device 100 is attached to the user's eyeball 30. In this case, the spatial light modulator 120 may be designed so that the center of curvature of the spatial light modulator 120 coincides with the center of curvature of the cornea 31.

As a suitable example when the spatial light modulator 120 has a convexly curved shape, the spatial light modulator 120 covers the entirety of the user's cornea 31 when the display device 100 is attached to the user's eyeball 30. Since the spatial light modulator 120 and the backlight 110 cover the entirety of the user's cornea 31, the light emitted from the backlight 110 and modulated by the spatial light modulator 120 can be converged at a maximum field of view regarding the entire optical system comprised of the cornea 31, the iris 33 and the crystalline lens 35, etc. of the user's eyeball 30. This allows the display device 100 to transmit the light converged at the maximum field of view through the crystalline lens 35 to be projected on the retina 37 of the eyeball 30 at the maximum field of view, thereby generating the reconstructed image for the full view of the user.

As one example, the spatial light modulator 120 may have a pixel pitch of approximately 3 to 5 µm. When the pixel pitch reduces, a diffraction angle of light which diffracts at each point of the spatial light modulator 120 widens. Extent of light in the crystalline lens 35 of the eyeball 30 gives an effective entrance pupil diameter in an image formation system of the eyeball 30. In the image formation system of the eyeball 30, when the entrance pupil diameter widens, a depth of field, which is a depth range in which the image is in focus, decreases. Therefore, the depth of field of the reconstructed image displayed three-dimensionally on the display device 100 can be narrowed by reducing the pixel pitch of the spatial light modulator 120, making it possible to display the reconstructed image in a particular position in the depth direction. That is, the display device 100 can show a three-dimensional image sharply in a particular position and show the three-dimensional image in a blurred state in a position in front or back of the particular position to the user wearing the display device 100 by reducing the pixel pitch of the spatial light modulator 120.

The polarizer 130 controls the polarization of light. As described above, the polarizer 130 transmits a component, which is polarized toward the particular direction, of the external light and blocks a component, which is polarized toward the direction orthogonal to the particular direction, of the external light. The particular direction is orthogonal to the direction in which the phase experiences spatial modulation in the spatial light modulator 120. In other words, orientations, etc. of the polarizer 130 and the spatial light modulator 120 are designed respectively, so that the phase of the light component transmitted through the polarizer 130 is not modulated spatially in the spatial light modulator 120. A thickness of the polarizer 130 is, for example, several µm to several tens of µm.

The driving unit 140 drives the display device 100. The driving unit 140 may include a memory, a controller, a battery and so on. The memory, controller, battery, etc. of the driving unit 140 may be implemented as an integrated unit or implemented as multiple units.

For example, the driving unit 140 stores information of a voltage value corresponding to each of one or more hologram patterns. The driving unit 140 is connected electrically to the light source 115 of the backlight 110 and the spatial light modulator 120, and controls them. For example, the driving unit 140 controls light emitted from the light source 115 by controlling electrical power supplied to the light source 115. The driving unit 140 controls the hologram pattern formed in the spatial light modulator 120 by controlling the voltage applied to the matrix electrode of the spatial light modulator 120 based on the information of the voltage value corresponding to each of the one or more hologram patterns. The driving unit 140 may control the position in the depth direction for three-dimensionally displaying the reconstructed image corresponding to the hologram pattern by controlling the voltage applied to the matrix electrode of the spatial light modulator 120.

The driving unit 140 is, for example, configured to accumulate electrical power. The driving unit 140 may be powered wirelessly from an external power supply, and in this case, the driving unit 140 may include an antenna for receiving power. Note that the driving unit 140 may be arranged on an outer peripheral side of the lens substrate 12 so that the driving unit 140 is not located inside the user's field of view when the display device 100 is attached to the user's eyeball 30.

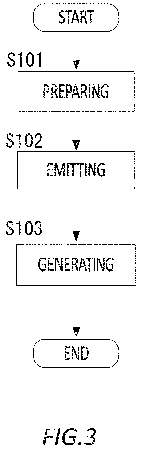

Fig. 3 illustrates a flowchart for describing one example of a driving method for driving the display device 100. As one example, the flow in Fig. 3 starts as the user completes charging to the display device 100 of the contact lens 10.

The display device 100 of the contact lens 10 performs preparing including acquiring the information of the voltage value required to control the hologram pattern formed by the spatial light modulator 120 and the display position in the depth direction for three-dimensionally displaying the reconstructed image corresponding to the hologram pattern (step S101). The display device 100 stores the information in advance. As one example, the hologram pattern and the display position may be designated by the user.

The display device 100 performs emitting the spatially coherent light that is converged, by the backlight 110, within the predetermined region (step S102). As a specific example, the light source 115 of the backlight 110 emits the coherent light, which is a spherical wave of linearly polarized light, into the waveguide 111 having a spherical shape. For example, the coherent light emitted into the waveguide 111 and propagating with total reflection inside the waveguide 111 is diffracted, by the thin film diffraction grating 113 provided in the waveguide 111, toward a direction perpendicular to the wavefront of the spherical wave converged within the predetermined region, for example, within the region in the vicinity of the center of the crystalline lens 35 when the display device 100 is attached to the user's eyeball 30, and is emitted toward a side of the spatial light modulator 120. Since the optical coupling efficiency of the thin film diffraction grating 113 decreases as closer to the incident position of the light from the light source 115 into the waveguide 111, the intensity of the light emitted from each point on the side of the spatial light modulator 120 of the waveguide 111 is uniform.

The display device 100 performs, by the spatial light modulator 120, forming the hologram pattern and generating the reconstructed image corresponding to the hologram pattern by spatially modulating the phase of the spatially coherent light entering from the backlight 110 (step S103), and ends the flow. The hologram pattern formed in step S103, and the display position in the depth direction of the generated reconstructed image correspond to the information acquired in the preparing in step S101. When the display device 100 which underwent the flow in Fig. 3 is attached by the user to his or her eyeball 30 and the user's eyeball 30 focuses on the reconstructed image, the image 50 corresponding to the reconstructed image is formed on the retina 37 of the user's eyeball 30. This allows the user wearing the contact lens 10 to simultaneously observe the reconstructed image generated by the display device 100 and the external world. Because the phase of the light component, which is transmitted through the polarizer 130, of the external light is not spatially modulated by the spatial light modulator 120, the spatial light modulator 120 does not cause blurring of the image of the external world. Note that the display device 100 can form a three-dimensional image that gives a sense of depth.

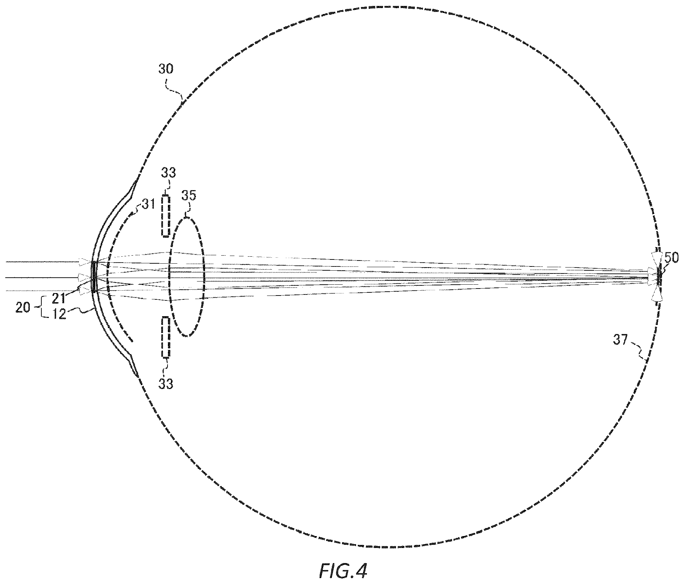

Fig. 4 schematically illustrates a contact lens 20 of a comparative example attached to the user's eyeball 30. The contact lens 20 of the comparative example includes an entirely flat spatial light modulator 21 using a plane wave as the illuminating light. As shown in Fig. 4, in order to enlarge the field of view, the flat spatial light modulator 21 using a plane wave as the illuminating light requires spreading the light on an entirety of the retina 37 of the user by reducing the pixel pitch of the spatial light modulator 21 to widen the diffraction angle of the light diffracted at each point of the spatial light modulator. Since the pixel pitch can only be reduced to approximately 3 µm, in the comparative example, the field of view can hardly be enlarged and only a part of the image 50 is formed on the retina 37 as shown in Fig. 4. When using the entirely flat spatial light modulator 21 using a plane wave as the illuminating light, even if the spatial light modulator is larger, the field of view is not widened. More specifically, when the spatial light modulator is larger, as can be seen from Fig. 4, the effective entrance pupil of the image formation system of the eyeball 30 becomes larger since the light on the crystalline lens 35 spreads more widely, bringing an effect of narrowing the depth of field of the reconstructed image of the three-dimensional display, but the field of view is not widened despite of the larger spatial light modulator.

On the other hand, the display device 100 according to the present embodiment generates the reconstructed image corresponding to the hologram pattern by emitting the spatially coherent light that converges within the predetermined region and spatially modulating the phase of the light with the hologram pattern. With the display device 100 having the configuration, as shown in Fig. 1, the light emitted from each point on the spatial light modulator 120 converges within the user's eyeball 30, passes through the central region of the crystalline lens 35 as one example of the predetermined region, and is projected at a position on the retina 37 symmetrical to the each point with respect to the central region of the crystalline lens 35. In this manner, the display device 100 can significantly widen the field of view when compared to the comparative example described above to spread the light on the entirety of the retina 37 of the eyeball 30, thereby forming a larger image 50 on the retina 37. The display device 100 does not require reducing the pixel pitch of the spatial light modulator 120 as in the comparative example described above in order to widen the field of view. Unlike the comparative example described above, the display device 100 has no cause and effect relationship between the pixel pitch of the spatial light modulator 120 and the field of view. The display device 100 can even further widen the field of view by enlarging the spatial light modulator 120 and so on along the user's cornea 31 in addition to using light that converges within the predetermined region as the illuminating light. As one example, the display device 100 can even further widen the field of view by enlarging the spatial light modulator 120 and so on along the user's cornea 31 by having the backlight 110 and the spatial light modulator 120 in a convexly curved shape.

In the descriptions of the embodiments above, the light source 115 has been a semiconductor laser or an LED as an example. Particularly when using laser as the light source 115, laser light can generate the reconstructed image corresponding to the hologram pattern more accurately without blurring, because it has high spatial and temporal coherence. In this manner, the backlight 110 may emit the laser light or may emit LED light as the spatially coherent light.

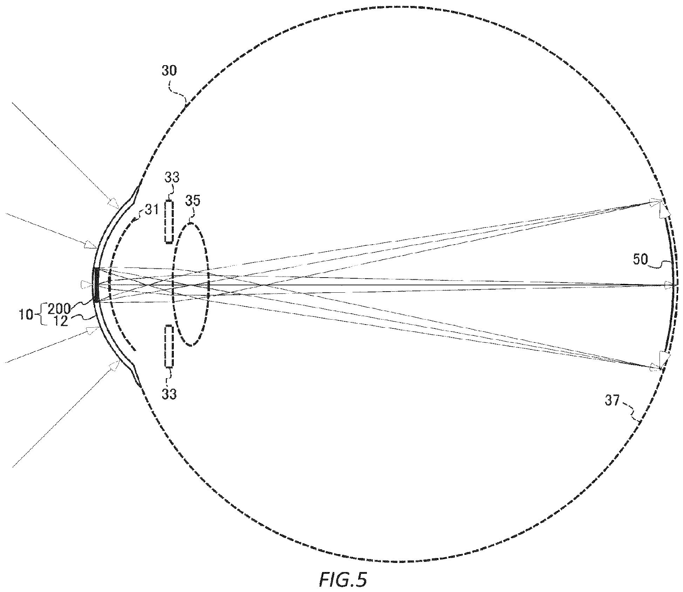

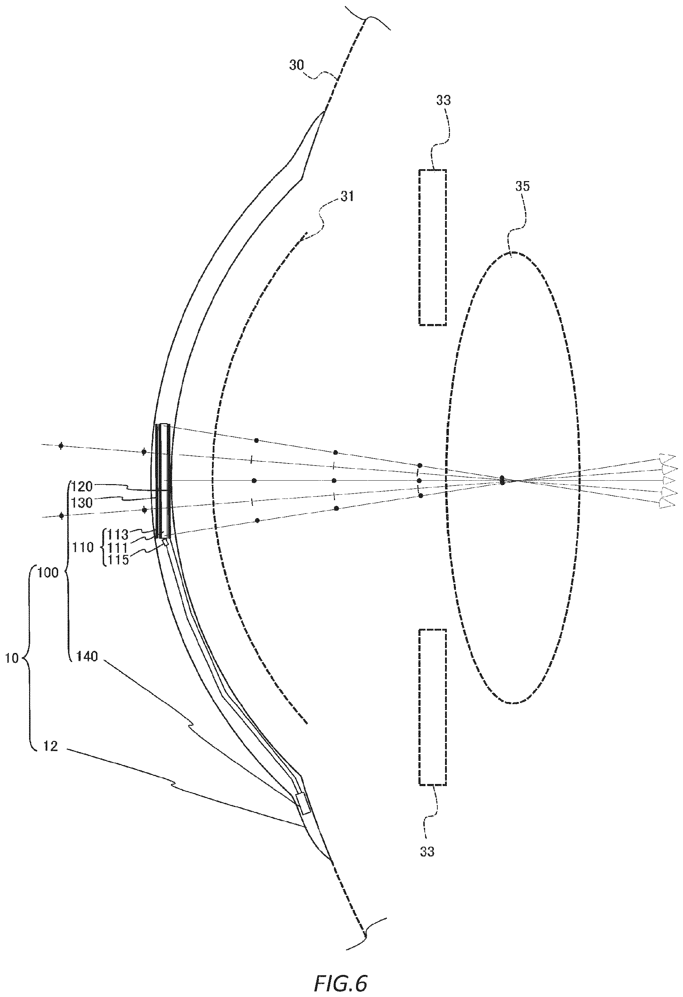

In the descriptions of embodiments above, the display device 100 is described as a configuration that has a convexly curved shape so as to follow the cornea 31 of the user's eyeball 30. Alternatively, the display device 100 may have a flat shape when emitting a spherical wave from the backlight 110. For example, the contact lens 10 according to another embodiment may include a display device 200 in a flat shape, and emit a spherical wave from the backlight 110. Fig. 5 schematically shows the contact lens 10 according to another embodiment attached to the user's eyeball 30 and Fig. 6 shows a partially enlarged view of the region including the contact lens 10 of Fig. 5. The display device 200 according to another embodiment has the same functions and configurations as the display device 100 according to the above-described embodiments except for having a flat shape as a whole, i.e., the backlight 110, the spatial light modulator 120, and the polarizer 130 have flat shapes, and the same reference numbers are attached to the same configurations and duplicate explanations are omitted. In the contact lens 10 according to another embodiment, when the display device 200 has a diameter of approximately 1 mm considering enclosing the display device 200 in the lens substrate 12 in a convexly curved shape, the image 50 with a field of view of approximately 20 degrees can be formed on the retina 37.

In the descriptions of embodiments above, the display device 100 is described as having a configuration including the driving unit 140. Alternatively, the display device 100 may be controlled, without the function of a memory or controller in the driving unit 140, wirelessly by an external control device. In this case, the control device may have the functions of a memory and controller in the driving unit 140. The control device may be a smartphone held by the user, or a wearable device, etc. attached to the user.

While the present invention has been described by way of the embodiments, the technical scope of the present invention is not limited to the above-described embodiments. It is apparent to persons skilled in the art that various alterations or improvements can be made to the above-described embodiments. It is also apparent from the described scope of the claims that the embodiments added with such alterations or improvements can be included the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: contact lens; 12: lens substrate; 20: contact lens; 21: spatial light modulator; 30: eyeball; 31: cornea; 33: iris; 35: crystalline lens; 37: retina; 50: image; 100, 200: display device; 110: backlight; 111: waveguide; 113: thin film diffraction grating; 115: light source; 120: spatial light modulator; 130: polarizer; 140: driving unit.

## Claims

1. A display device (100) of an eyeball-mounted type, **characterized in** comprising:
a backlight (110) which emits spatially coherent light that converges within a predetermined region, which is a spherical wave light; and
a spatial light modulator (120) which forms a hologram pattern, and generates a reconstructed image corresponding to the hologram pattern by emitting a light obtained by spatially modulating a phase of the spherical wave light entering from the backlight (110).

2. The display device (100) according to claim 1, wherein the backlight (110) has a convexly curved shape or a flat shape.

3. The display device (100) according to claim 1 or 2, wherein the spatial light modulator (120) has a convexly curved shape or a flat shape.

4. The display device (100) according to claim 1, wherein the backlight (110) and the spatial light modulator (120) have a convexly curved shape to follow a user's cornea when the display device (100) is attached to a user's eyeball.

5. The display device (100) according to any one of claims 2 to 4, wherein the backlight (110) and the spatial light modulator (120) cover an entirety of a user's cornea when the display device (100) is attached to a user's eyeball.

6. The display device (100) according to any one of claims 1 to 5, further comprising
a polarizer (130), wherein:
the backlight (110) is transparent; and
the spatial light modulator (120) modulates the phase of the spherical wave light entering from the backlight (110) and does not modulate a phase of a light component, which is transmitted through the polarizer (130), of external light.

7. The display device (100) according to any one of claims 1 to 6, wherein the backlight (110) has a waveguide (111), a thin film diffraction grating (113) provided in the waveguide (111), and a light source (115) that emits the spherical wave light into the waveguide (111).

8. The display device (100) according to claim 7, wherein the thin film diffraction grating (113) converges the spherical wave light within the predetermined region by diffracting the spherical wave light emitted into the waveguide (111) from the light source (115).

9. The display device (100) according to claim 7 or 8, wherein the thin film diffraction grating (113) includes at least any of a nanostructured diffraction grating or a hologram optical element.

10. The display device (100) according to any one of claims 7 to 9, wherein an optical coupling efficiency of the thin film diffraction grating (113) is lower when closer to a position where the spherical wave light from the light source (115) enters into the waveguide (111).

11. The display device (100) according to any one of claims 7 to 10, wherein the light source (115) includes a plurality of light sources, the backlight (110) has the plurality of the light sources, and the plurality of light sources emit the spherical wave light from positions different from each other in a periphery of the waveguide (111) into the waveguide (111).

12. The display device (100) according to any one of claims 7 to 11, wherein the light source is a laser or an LED.

13. A contact lens (10), comprising:
the display device (100) according to any one of claims 1 to 12; and
a lens substrate (12) enclosing the display device (100).

14. A driving method for driving a display device (100) of an eyeball-mounted type including a backlight (110) and a spatial light modulator (120), **characterized in that** the method comprises:
emitting a spatially coherent light which converges within a predetermined region by the backlight (110), which is a spherical wave light; and
forming a hologram pattern and generating a reconstructed image corresponding to the hologram pattern by emitting a light obtained by spatially modulating a phase of the spherical wave light entering from the backlight (110), by the spatial light modulator (120).

## Patentansprüche

1. Anzeigevorrichtung (100) vom augapfelmontierten Typ, **gekennzeichnet durch**:
eine Hintergrundbeleuchtung (110), die räumlich kohärentes Licht emittiert, das innerhalb eines vorgegebenen Bereichs konvergiert und sphärisches Wellenlicht ist; und
einen räumlichen Lichtmodulator (120), der ein Hologrammmuster bildet und ein dem Hologrammmuster entsprechendes rekonstruiertes Bild erzeugt, indem er Licht emittiert, das durch räumliches Modulieren einer Phase des von der Hintergrundbeleuchtung (110) eintretenden sphärischen Wellenlichts erhalten wird.

2. Anzeigevorrichtung (100) nach Anspruch 1, wobei die Hintergrundbeleuchtung (110) eine konvex gekrümmte Form oder eine flache Form aufweist.

3. Anzeigevorrichtung (100) nach Anspruch 1 oder 2, wobei der räumliche Lichtmodulator (120) eine konvex gekrümmte Form oder eine flache Form aufweist.

4. Anzeigevorrichtung (100) nach Anspruch 1, wobei die Hintergrundbeleuchtung (110) und der räumliche Lichtmodulator (120) eine konvex gekrümmte Form aufweisen, so dass sie der Augenhornhaut eines Benutzers folgen, wenn die Anzeigevorrichtung (100) am Augapfel eines Benutzers befestigt ist.

5. Anzeigevorrichtung (100) nach einem der Ansprüche 2 bis 4, wobei die Hintergrundbeleuchtung (110) und der räumliche Lichtmodulator (120) die gesamte Augenhornhaut eines Benutzers abdecken, wenn die Anzeigevorrichtung (100) am Augapfel eines Benutzers befestigt ist.

6. Anzeigevorrichtung (100) nach einem der Ansprüche 1 bis 5, ferner aufweisend:
einen Polarisator (130), wobei:
die Hintergrundbeleuchtung (110) transparent ist; und
der räumliche Lichtmodulator (120) die Phase des von der Hintergrundbeleuchtung (110) eintretenden sphärischen Wellenlichts moduliert und eine Phase einer Lichtkomponente von externem Licht nicht moduliert, die über den Polarisator (130) übertragen wird.

7. Anzeigevorrichtung (100) nach einem der Ansprüche 1 bis 6, wobei die Hintergrundbeleuchtung (110) einen Wellenleiter (111), ein im Wellenleiter (111) vorgesehenes Dünnschicht-Beugungsgitter (113) und eine Lichtquelle (115) aufweist, die das sphärische Wellenlicht in den Wellenleiter (111) emittiert.

8. Anzeigevorrichtung (100) nach Anspruch 7, wobei das Dünnschicht-Beugungsgitter (113) das sphärische Wellenlicht innerhalb des vorgegebenen Bereichs konvergent ausrichtet, indem es das von der Lichtquelle (115) in den Wellenleiter (111) emittierte sphärische Wellenlicht beugt.

9. Anzeigevorrichtung (100) nach Anspruch 7 oder 8, wobei das Dünnschicht-Beugungsgitter (113) mindestens eine Komponente unter einem nanostrukturierten Beugungsgitter und einem holografischen optischen Element aufweist.

10. Anzeigevorrichtung (100) nach einem der Ansprüche 7 bis 9, wobei eine optische Kopplungseffizienz des Dünnschicht-Beugungsgitters (113) geringer ist, wenn es näher an einer Position liegt, an der das sphärische Wellenlicht von der Lichtquelle (115) in den Wellenleiter (111) eintritt.

11. Anzeigevorrichtung (100) nach einem der Ansprüche 7 bis 10, wobei die Lichtquelle (115) eine Vielzahl von Lichtquellen aufweist, die Hintergrundbeleuchtung (110) die Vielzahl von Lichtquellen aufweist und die Vielzahl von Lichtquellen das sphärische Wellenlicht von in einem Umfang des Wellenleiters (111) voneinander verschiedenen Positionen in den Wellenleiter (111) emittieren.

12. Anzeigevorrichtung (100) nach einem der Ansprüche 7 bis 11, wobei die Lichtquelle ein Laser oder eine LED ist.

13. Kontaktlinse (10), aufweisend:
die Anzeigevorrichtung (100) nach einem der Ansprüche 1 bis 12; und
ein Linsensubstrat (12), das die Anzeigevorrichtung (100) umschließt.

14. Verfahren zum Ansteuern einer Anzeigeeinrichtung (100) vom augapfelmontierten Typ mit einer Hintergrundbeleuchtung (110) und einem räumlichen Lichtmodulator (120), **dadurch gekennzeichnet, dass** das Verfahren aufweist:
Emittieren von räumlich kohärentem Licht, das sphärisches Wellenlicht ist und innerhalb eines vorgegebenen Bereichs konvergiert, durch die Hintergrundbeleuchtung (110); und
Bilden eines Hologrammmusters und Erzeugen eines dem Hologrammmuster entsprechenden rekonstruierten Bildes durch Emittieren von Licht, das durch räumliches Modulieren einer Phase des von der Hintergrundbeleuchtung (110) eintretenden sphärischen Wellenlichts durch den räumlichen Lichtmodulator (120) erhalten wird.

## Revendications

1. Dispositif d'affichage (100) d'un type monté sur bulbe de l'œil, **caractérisé en ce qu'**il comprend :
un rétroéclairage (110) qui émet une lumière cohérente du point de vue spatial qui converge au sein d'une région prédéterminée, qui est une lumière à onde sphérique ; et
un modulateur spatial de lumière (120) qui forme un motif d'hologramme, et génère une image reconstruite correspondant au motif d'hologramme en émettant une lumière obtenue en modulant de manière spatiale une phase de la lumière à onde sphérique entrant depuis le rétroéclairage (110).

2. Dispositif d'affichage (100) selon la revendication 1, dans lequel le rétroéclairage (110) a une forme incurvée de manière convexe ou une forme plate.

3. Dispositif d'affichage (100) selon la revendication 1 ou 2, dans lequel le modulateur spatial de lumière (120) a une forme incurvée de manière convexe ou une forme plate.

4. Dispositif d'affichage (100) selon la revendication 1, dans lequel le rétroéclairage (110) et le modulateur spatial de lumière (120) ont une forme incurvée de manière convexe pour suivre la cornée d'un utilisateur lorsque le dispositif d'affichage (100) est attaché au bulbe de l'œil d'un utilisateur.

5. Dispositif d'affichage (100) selon l'une quelconque des revendications 2 à 4, dans lequel le rétroéclairage (110) et le modulateur spatial de lumière (120) recouvrent la totalité de la cornée d'un utilisateur lorsque le dispositif d'affichage (100) est attaché au bulbe de l'œil d'un utilisateur.

6. Dispositif d'affichage (100) selon l'une quelconque des revendications 1 à 5, comprenant en outre
un polariseur (130), dans lequel :
le rétroéclairage (110) est transparent ; et
le modulateur spatial de lumière (120) module la phase de la lumière à onde sphérique entrant depuis le rétroéclairage (110) et ne module pas une phase d'une composante de lumière, qui est transmise à travers le polariseur (130), de la lumière externe.

7. Dispositif d'affichage (100) selon l'une quelconque des revendications 1 à 6, dans lequel le rétroéclairage (110) a un guide d'onde (111), un réseau de diffraction à couche mince (113) pourvu dans le guide d'onde (111), et une source lumineuse (115) qui émet la lumière à onde sphérique dans le guide d'onde (111).

8. Dispositif d'affichage (100) selon la revendication 7, dans lequel le réseau de diffraction à couche mince (113) fait converger la lumière à onde sphérique au sein de la région prédéterminée en diffractant la lumière à onde sphérique émise dans le guide d'onde (111) depuis la source lumineuse (115).

9. Dispositif d'affichage (100) selon la revendication 7 ou 8, dans lequel le réseau de diffraction à couche mince (113) comprend au moins l'un quelconque parmi un réseau de diffraction nanostructuré ou un élément optique d'hologramme.

10. Dispositif d'affichage (100) selon l'une quelconque des revendications 7 à 9, dans lequel une efficacité de couplage optique du réseau de diffraction à couche mince (113) est inférieure lorsqu'elle est plus proche d'une position où la lumière à onde sphérique provenant de la source lumineuse (115) entre dans le guide d'onde (111).

11. Dispositif d'affichage (100) selon l'une quelconque des revendications 7 à 10, dans lequel la source lumineuse (115) inclut une pluralité de sources lumineuses, le rétroéclairage (110) a la pluralité des sources lumineuses, et la pluralité des sources lumineuses émettent la lumière à onde sphérique à partir de positions différentes les unes des autres dans une périphérie du guide d'onde (111) dans le guide d'onde (111).

12. Dispositif d'affichage (100) selon l'une quelconque des revendications 7 à 11, dans lequel la source lumineuse est un laser ou une LED.

13. Lentille de contact (10), comprenant :
le dispositif d'affichage (100) selon l'une quelconque des revendications 1 à 12 ; et
un substrat de lentille (12) renfermant le dispositif d'affichage (100).

14. Procédé d'entraînement destiné à entraîner un dispositif d'affichage (100) d'un type monté sur bulbe de l'œil incluant un rétroéclairage (110) et un modulateur spatial de lumière (120), **caractérisé en ce que** le procédé comprend les étapes consistant à :
émettre une lumière cohérente du point de vue spatial qui converge au sein d'une région prédéterminée par le rétroéclairage (110), qui est une lumière à onde sphérique ; et
former un motif d'hologramme et générer une image reconstruite correspondant au motif d'hologramme en émettant une lumière obtenue en modulant de manière spatiale une phase de la lumière à onde sphérique entrant depuis le rétroéclairage (110), par le modulateur spatial de lumière (120).
